# FASCICULE DE BREVET EUROPEEN

(11) **EP 2 920 092 B1**
(45) Date de publication et mention de la délivrance du brevet: **31.08.2016**
(21) Numéro de dépôt: 13808076.7
(22) Date de dépôt: 12.11.2013
(51) Int. Cl.: B65G 47/14

(54) **MACHINE DE DISTRIBUTION D'OBJETS EN VRAC**
MASCHINE ZUM VERTEILEN VON SCHÜTTGUT
MACHINE FOR DISTRIBUTING BULK MATERIAL

(30) Priorité: 13.11.2012 FR 1260810
(43) Date de publication de la demande: 23.09.2015
(73) Titulaire: Unista, 85600 Treize-Septiers (FR)
(72) Inventeur: FORGET, Anthony, F-85600 Treize-Septiers (FR); BARREAU, Frédéric, F-85170 Les Lucs Sur Boulogne (FR)
(74) Mandataire: Cabinet Chaillot
(86) Numéro de dépôt international: PCT/FR2013/052717
(87) Numéro de publication internationale: WO 2014/076409

(56) Documents cités:
- EP-A1- 2 100 833
- DE-A1- 10 133 805
- DE-A1- 19 917 923
- GB-A- 2 184 105
- US-A- 3 684 077
- US-A1- 2006 037 838

## Description

La présente invention se rapporte au domaine de la manutention et en particulier celui dit du « dévracage », qui consiste à séparer des objets alimentés en vrac pour les distribuer de manière ordonnée, et porte plus particulièrement sur une machine de dévracage ou distribution d'objets avec alimentation en vrac.

A l'heure actuelle, les machines de dévracage comprennent d'une manière générale un convoyeur rectiligne, un système de vision et un robot de transfert.

Des objets, reçus en vrac dans une trémie et qu'il s'agit de distribuer de manière séparée et éventuellement selon une position donnée, sont versés sur la surface supérieure, dite de transport, du convoyeur rectiligne, dans une première région de ce dernier, par exemple directement à partir d'une ouverture prévue dans le fond de la trémie qui dans ce cas se situe au-dessus de la surface de transport ou par l'intermédiaire d'un convoyeur de transfert. La vitesse d'entraînement de la surface de transport est définie, éventuellement avec d'autres paramètres tels que la vitesse d'alimentation des objets, de telle sorte que les objets versés sur celle-ci se répartissent en une seule couche.

Les objets sont ensuite transportés sur une certaine distance par la surface de transport, distance sur laquelle les objets, dans l'idéal, se stabilisent sur ladite surface de transport, de telle sorte que leur position par rapport à cette dernière est fixe.

Les objets arrivent ensuite dans une deuxième région du convoyeur rectiligne au niveau de laquelle est placé le système de vision qui détermine la position de chacun des objets par rapport à ladite surface de transport.

Après être passés par la deuxième région du convoyeur rectiligne, les objets sont transportés, toujours par la surface de transport, jusqu'à une troisième région du convoyeur linéaire au niveau de laquelle est placé un robot de transfert qui saisit un à un les objets au fur et à mesure qu'ils passent dans la troisième région, puis les pose sur un convoyeur de sortie à partir duquel les objets sont distribués, par exemple, à d'autres machines, telles que des machines de conditionnement, de remplissage, etc.

Il arrive parfois que le robot de transfert ne puisse saisir chaque objet, par exemple parce que l'objet non saisi s'est déplacé entre le moment où le système de vision a défini sa position et le moment où le robot de transfert tente de le saisir, ou parce que le robot de transfert doit saisir un nombre trop important d'objets en un temps trop court, par exemple du fait que l'on ait choisi une vitesse élevée de la surface de transport en vue de rendre maximal le débit de la machine.

Dans de tels cas, il est généralement prévu au bout du convoyeur rectiligne un bac dans lequel tombe les objets non saisis et qui, une fois rempli, doit être manutentionné par un opérateur pour ré-alimenter dans la machine de dévracage les objets non saisis.

Un autre inconvénient d'une telle machine de dévracage est son encombrement important, du fait du temps de stabilisation nécessaire à prévoir, et donc de la distance correspondante de la surface de transport.

La présente invention vise à surmonter les inconvénients mentionnés ci-dessus, en proposant une machine de dévracage dans laquelle le convoyeur est agencé pour ramener au-dessus de la trémie d'alimentation les objets non saisis dans la région de saisie pour qu'ils soient directement transférés à la trémie d'alimentation, ce qui permet non seulement d'éviter la manutention de ces objets non saisis, mais encore de réduire l'encombrement de la machine.

DE 101 33 805 A1 et EP 2 100 833 A1 décrivent une machine selon le préambule de la revendication 1.

La présente invention a pour objet une machine de distribution d'objets avec alimentation en vrac, comprenant :
- une trémie d'alimentation, destinée à recevoir des objets en vrac qu'il s'agit de distribuer ;
- un dispositif de transport d'objets ayant une surface de transport d'objets entraînée par des moyens d'entraînement pour transporter les objets qu'il s'agit de distribuer et destinée, en utilisation, à recevoir sur celle-ci, dans une première région du dispositif de transport d'objets, dite d'entrée, des objets en vrac ;
- un dispositif de transfert des objets de la trémie au dispositif de transport d'objets, destiné à verser sur la surface de transport, dans la région d'entrée, les objets qui proviennent de la trémie d'alimentation ;
- un système de vision placé au niveau d'une deuxième région du dispositif de transport d'objets, dite de vision, en aval, par rapport au déplacement de la surface de transport, de la région d'entrée, et apte à déterminer la position, sur le dispositif de transport d'objets, de chacun des objets, la région de vision et la région d'entrée étant séparées d'une distance définie, conjointement avec la vitesse d'entraînement de la surface de transport, pour que les objets soient répartis en une seule couche et stabilisés en position lorsqu'ils arrivent à la région de vision ; et
- au moins un robot de transfert placé au niveau d'une troisième région du dispositif de transport d'objets, dite de saisie, en aval, par rapport au déplacement de la surface de transport, de la région de vision et apte à saisir chaque objet, au moins sur la base de la position dudit objet fournie par le système de vision, et à le placer sur un convoyeur de sortie,
le dispositif de transport d'objets se prolongeant, après la région de saisie, en revenant au-dessus de la trémie d'alimentation, où il définit une quatrième région, dite de récupération, à partir de laquelle les objets en vrac non saisis dans la région de saisie sont transférés directement à la trémie d'alimentation pour que lesdits objets non saisis soient de nouveau versés sur la surface de transport du dispositif de transport d'objets en vue d'une saisie par le robot de transfert, caractérisée par le fait que le dispositif de transport d'objets présente une ouverture centrale autour d'au moins une partie de laquelle s'étend la surface de transport et à travers laquelle passe le dispositif de transfert qui est agencé pour faire monter les objets en vrac au-dessus de ladite surface de transport et les verser sur cette dernière.

La présence de l'ouverture centrale, qui autorise le positionnement d'un dispositif de transfert dans les limites de l'empreinte au sol du dispositif de transport d'objets, permet de réduire encore davantage l'encombrement de la machine.

La région de récupération peut se trouver au-dessus de la trémie d'alimentation en étant au voisinage de cette dernière, mais est, de préférence, à la verticale de la trémie d'alimentation.

On souligne ici que l'expression « surface de transport » mentionnée ci-dessus peut être formée, dans le cas d'un convoyeur à bande, par la surface de la bande, ou, dans le cas d'un convoyeur à rouleaux, par la surface du plan imaginaire formé par les lignes de contact entre les rouleaux et les objets, ou, dans le cas d'un convoyeur à maillons, par les surfaces supérieures des maillons, etc.

Par ailleurs, la présente invention n'est pas limitée à l'utilisation d'un quelconque système de vision spécifique ou d'un quelconque robot de transfert spécifique. De plus, la machine selon la présente invention peut être utilisée avec tout type d'objets, tels que des flacons, des bouchons, des pièces mécaniques, des morceaux de viande, etc., quelle que soit la forme de l'objet à traiter, sans aucune modification à apporter au dispositif de transport d'objets. Ainsi, des objets de différentes tailles peuvent être saisis sans aucun changement de pièces sur la machine.

Le dispositif de transfert peut, par exemple, être un convoyeur élévateur.

La surface de transport du dispositif de transport d'objets peut suivre un chemin ouvert, notamment en U ou en fer à cheval.

Selon un mode de réalisation préféré, le dispositif de transport d'objets est un carrousel définissant un circuit fermé.

Peuvent être prévus, de manière particulièrement avantageuse dans le cas d'un carrousel, dans la région de récupération des moyens pour dévier en direction de la trémie d'alimentation les objets non saisis dans la région de saisie, lesquels moyens de déviation sont notamment formés par un déflecteur placé en travers de la surface de transport.

De préférence, le carrousel se présente sous la forme d'un corps de forme circulaire, le cas échéant en anneau pour permettre le passage du dispositif de transfert à travers l'ouverture centrale de l'anneau, le corps étant monté rotatif autour d'un axe vertical et la surface supérieure du corps constituant la surface de transport d'objets.

Un tel carrousel formé d'un corps circulaire permet non seulement de réduire encore davantage l'encombrement de la machine, mais encore est d'une structure plus simple à mettre en oeuvre qu'un convoyeur, par exemple à bande, ce qui fait diminuer les coûts de fabrication, tout en permettant de conserver une durée de stabilisation, à savoir entre le moment où un objet est versé sur la région d'entrée de la surface de transport et le moment où il arrive à la région de vision, qui est suffisamment longue pour que les objets puissent se stabiliser sur la surface de transport. En effet, pour un même encombrement, la durée de stabilisation avec un tel corps circulaire est n fois plus longue que celle avec un convoyeur rectiligne.

Avantageusement, un carter de protection forme un rebord le long du bord extérieur de la surface de transport, de la région d'entrée à au moins la région de saisie, et la surface de transport est inclinée vers l'extérieur du dispositif de transport d'objets de telle sorte que les objets peuvent être retenus sur la surface de transport par le carter de protection et se stabiliser contre ce dernier.

De préférence, la surface de transport du corps formant le carrousel appartient à un cône de révolution imaginaire dont l'axe coïncide avec l'axe de rotation du corps et dont le sommet est au-dessus du corps, le demi-angle au sommet du cône étant avantageusement compris entre 1° et 45°.

Utiliser un tel corps pour former le carrousel est également avantageux en ce qu'il permet de former de manière aisée une surface de transport inclinée, ce qui permet de stabiliser plus facilement certains objets mais ce qui est difficile à mettre en oeuvre dans le cas d'un convoyeur rectiligne.

Utiliser un corps en cône permet en outre de stabiliser plus facilement et plus rapidement tout type d'objet.

La surface de transport peut néanmoins être horizontale, avec ou sans le carter de protection.

La machine peut comprendre en outre un convoyeur de sortie, sur lequel, en utilisation, les objets sont posés par le robot de transfert, une partie du convoyeur de sortie étant, de préférence, disposée au-dessus de la trémie d'alimentation.

Disposer le convoyeur de sortie au-dessus de la trémie permet aux objets qui viendraient à chuter du convoyeur de sortie au moment de la pose ou peu après, d'être immédiatement récupérés et ré-introduits dans le système de dévracage, sans moyens techniques intermédiaires particuliers.

De préférence, le convoyeur de sortie est disposé de telle sorte que l'espace au-dessus et autour du convoyeur de sortie est libre de tout obstacle au déplacement du robot de transfert, de façon à permettre à ce dernier d'accéder au convoyeur de sortie par l'un ou l'autre des côtés du convoyeur de sortie, par rapport à la direction de transport de ce dernier.

Etant donné que les objets peuvent être dans une orientation quelconque lorsqu'ils se trouvent sur la surface de transport dans la région de saisie, permettre l'accès du robot de transfert de chaque côté du convoyeur de sortie permet au robot de venir placer l'objet dans une position désirée sur le convoyeur de sortie, par exemple lorsque l'on souhaite que l'objet soit disposé selon une orientation spécifique sur le convoyeur de sortie.

Pour mieux illustrer l'objet de la présente invention, on va en décrire ci-après un mode de réalisation préféré avec référence aux dessins annexés.

Sur ces dessins :
- les Figures 1 et 2 sont des vues en perspective respectivement de l'avant et de l'arrière d'une machine de distribution d'objets avec alimentation en vrac selon un mode de réalisation préféré de la présente invention ;
- les Figures 3 et 4 sont des vues en perspective de dessus, respectivement de l'avant et de l'arrière, d'un ensemble formé de la trémie, du convoyeur élévateur, du carrousel, du système de vision et du convoyeur de sortie de la machine représentée sur les Figures 1 et 2 ;
- la Figure 5 est une vue en coupe verticale du carrousel selon le mode de réalisation préféré de la présente invention ; et
- les Figures 6 et 7 sont des vues respectivement de dessus et en perspective de l'ensemble représenté sur les Figures 3 et 4, un flacon à distribuer étant représenté dans chaque stade de son traitement par la machine.

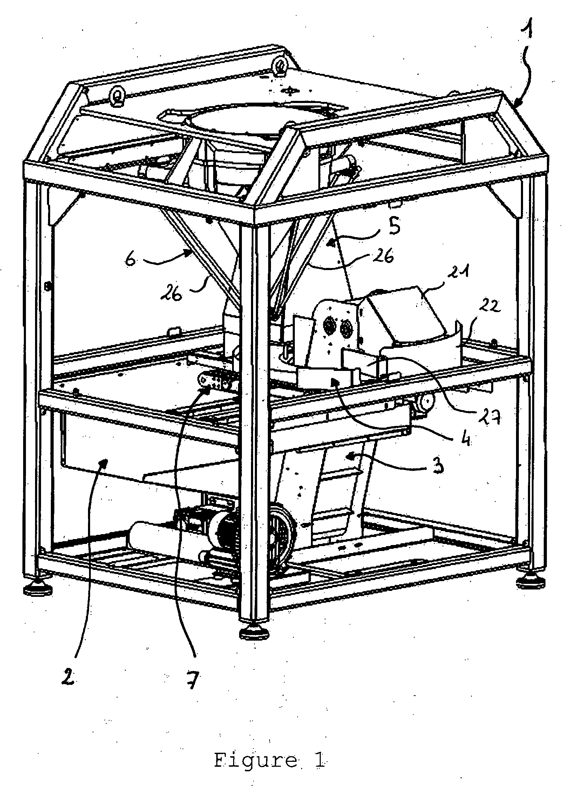

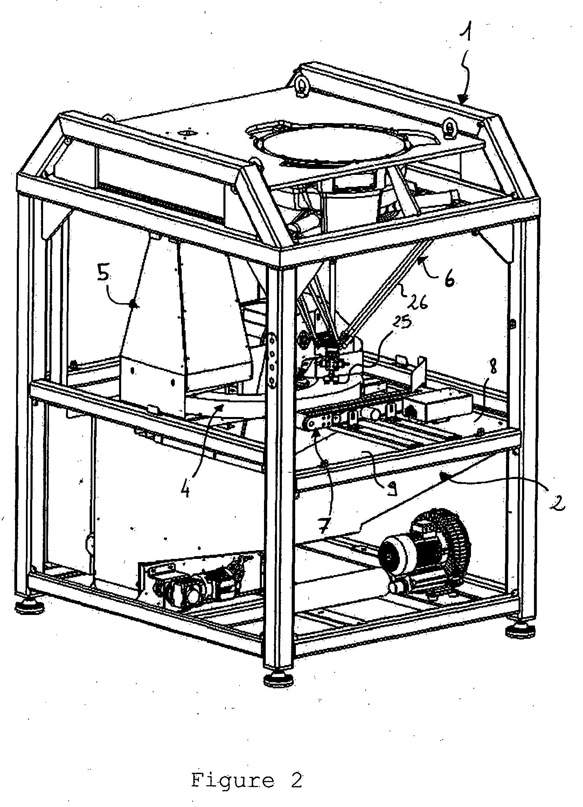

Si l'on se réfère aux Figures 1 à 5, on peut voir qu'une machine selon un mode de réalisation préféré de la présente invention comprend un châssis mécanosoudé 1 portant une trémie 2, un convoyeur élévateur 3, un carrousel 4, un système de vision 5, un robot de transfert 6 et un convoyeur de sortie 7.

Dans un souci de clarté des dessins, les portes et carters de protection fermant le châssis n'ont pas été représentés.

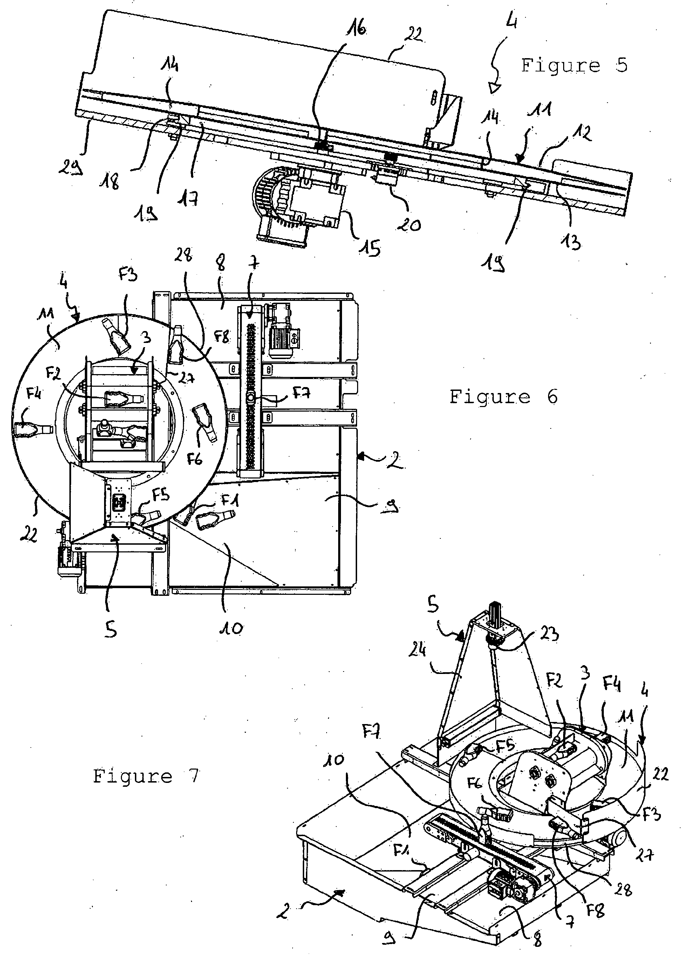

La trémie 2 possède une ouverture d'alimentation 8 qui débouche sur un côté du châssis et par laquelle sont introduits en vrac dans la machine les objets qu'il s'agit de distribuer de manière ordonnée, un fond incliné 9 le long duquel glisse les objets et s'achevant en un entonnoir 10 (Figures 6 et 7) dont la direction est perpendiculaire à la direction d'introduction des objets et qui se termine en une ouverture de sortie.

Le convoyeur élévateur 3 est d'une structure classique, bien connue dans le domaine, et présente une partie horizontale disposée sous l'ouverture de sortie de la trémie 2 de telle sorte que les objets sortant de la trémie 2 par l'ouverture de sortie chute par gravité sur la partie horizontale du convoyeur élévateur 3, et une partie élévatrice par laquelle les objets sont remontés tout en haut du convoyeur élévateur 3 pour être versés sur le carrousel 4. Une partie du fond de la trémie 2 pourrait être constituée d'un convoyeur pour optimiser l'alimentation du convoyeur élévateur 3.

Dans le mode de réalisation représenté, le convoyeur élévateur 3 est un convoyeur à taquets, mais tout type de convoyeur élévateur peut être utilisé, pourvu qu'il permette de récupérer les objets en sortie de la trémie 2 et de les remonter au-dessus du carrousel 4.

Le carrousel 4 est formé par un corps annulaire 11, monté rotatif autour d'un axe vertical présentant une surface supérieure 11 destinée à transporter les objets.

Le corps 11 est formé d'une plaque supérieure 12 et d'une plaque inférieure 13 annulaires et rendues solidaires l'une de l'autre par des entretoises 14 qui sont réparties circonférentiellement.

La plaque supérieure 12 est conformée pour que sa surface supérieure, tournée vers le haut et destinée à recevoir les objets transportés par le carrousel 4, est inclinée vers l'extérieur et plus particulièrement se situe sur un cône de révolution imaginaire dont l'axe coïncide avec l'axe de rotation du corps 11 et dont le sommet est au-dessus du corps 11, le demi-angle au sommet du cône étant de 3° sur l'exemple représenté.

Le corps 11 est entraîné en rotation par tout moyen approprié, tel que par exemple un motoréducteur 15 faisant tourner un pignon 16 en prise avec une couronne à denture intérieure 17 solidaire de la sous-face de la plaque inférieure 13 et entourant l'ouverture centrale du corps 11.

Le corps 11 est supporté et guidé en translation par plusieurs ensembles galets concentriques 18 répartis circonférentiellement et dans lesquels est guidée une collerette 19 formée sur l'extérieur de la couronne 17, les galets 18, le motoréducteur 15, le carter de protection 22, etc., étant porté par un plateau 29 lui-même solidaire du châssis 1.

Des moyens de suivi de la position du corps 11 sont également prévus, tels que par exemple le codeur 20, cette fonction, dite de « tracking », est bien connue dans le domaine de la manutention.

Dans le mode de réalisation représenté, le diamètre extérieur du corps 11 est de 1000 mm, la largeur de la surface de transport est de 400 mm et l'ouverture centrale est de dimension suffisante pour que la partie élévatrice du convoyeur élévateur 3 puisse la traverser, ce qui permet de placer le convoyeur élévateur 3 au centre du carrousel 4 et ainsi de réduire l'encombrement de la machine.

Il est prévu un capot 21 en regard de la région d'extrémité haute du convoyeur élévateur 3 et qui définit avec celle-ci un tunnel de décharge d'objets par lequel les objets sont versés dans la région, dite d'entrée, du corps 11 au-dessus de laquelle le capot 21 est en surplomb.

Un carter de protection 22 se présentant sous la forme d'une bande verticale de matériau rigide s'étend autour du corps 11, en formant un rebord à proximité immédiate du bord extérieur de la surface de transport et contre lequel vient se stabiliser des objets susceptibles de rouler sur la surface de transport, tels que des objets sphériques.

Le système de vision 5 est placé diamétralement opposé à la région d'entrée du carrousel 4, au niveau d'une deuxième région dite de vision, et détermine la position de chaque objet par rapport à la surface de transport, lorsqu'il passe dans la région de vision, par exemple sur la base d'images prises par le système de vision.

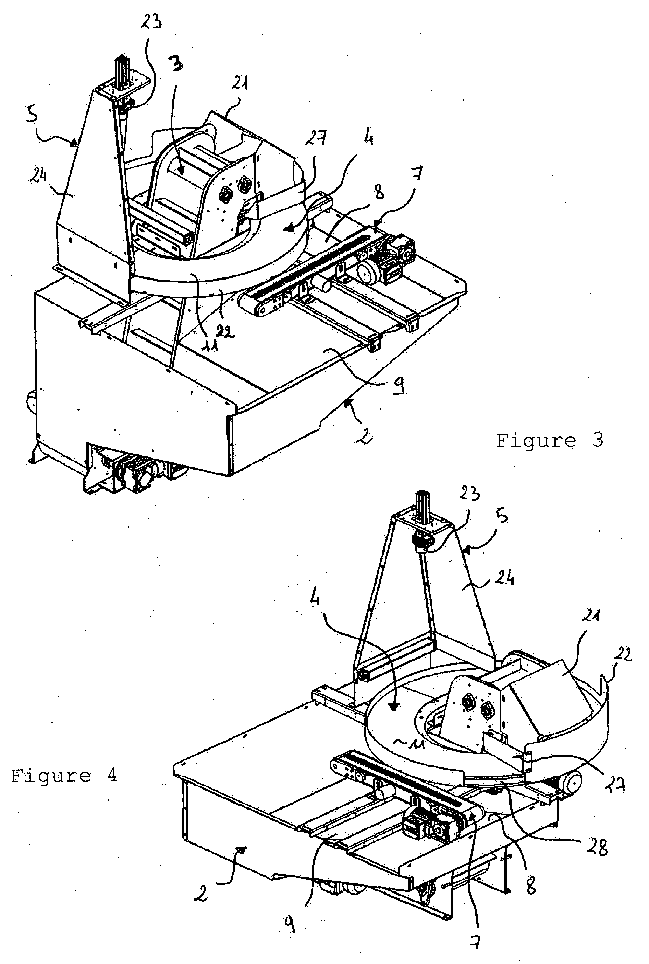

Le système de vision 5 comprend une caméra 23 et une hotte de vision 24 et un éclairage, dont certains flancs n'ont pas été représentés sur les Figures 3 à 6 afin que l'on puisse voir la caméra 23.

Les systèmes de vision assurant une fonction de définition de la position d'un objet sur un dispositif de transport, tel qu'un convoyeur, est très bien connu dans le domaine de la manutention et ne sera donc pas décrit en détail. On peut mentionner, à titre d'exemple seulement, la demande de brevet français FR 2 725 640, publiée le 19/04/1996, qui décrit un système de vision utilisé pour le tri d'objets mais qui est applicable sans difficulté à la présente invention.

Le robot de transfert 6 est placé en aval du système de vision 5, au niveau d'une troisième région dite de saisie, et est agencé pour venir saisir chaque objet dont la position a été déterminée par le système de vision et venir le placer sur le convoyeur de sortie 7.

Le robot de transfert 6 est formé d'un préhenseur 25 tenu par un ensemble de bras 26 déplaçant dans l'espace le préhenseur 25.

La encore, les robots de transfert étant très bien connus dans le domaine de la manutention, le robot de transfert 6 ne sera pas décrit plus en détail. On peut également se reporter, par exemple, à la demande de brevet FR 2 725 640 mentionnée ci-dessus, où est décrit un robot de transfert coopérant avec un système de vision.

On va maintenant décrire ci-après le fonctionnement de la machine selon le mode de réalisation préféré de la présente invention, avec référence aux Figures 6 et 7, sur laquelle on a représenté un flacon dans chaque stade de son traitement par la machine de dévracage.

Le flacon est tout d'abord introduit, avec une multitude d'autres flacons non représentés, dans la trémie 2 dans laquelle il glisse jusqu'à arriver à l'entonnoir 10 (Flacon F1) ou, le cas échéant, le convoyeur formant partie du fond de la trémie 2.

Arrivé à l'ouverture de sortie de la trémie 2, le flacon chute sur la partie horizontale du convoyeur élévateur 3 et est remonté le long de la partie élévatrice, par un taquet dans le mode de réalisation représenté (Flacon F2).

Une fois au sommet du convoyeur élévateur 3, le flacon chute sur la surface de transport du carrousel 4 (Flacon F3), puis est transporté par la surface de transport, qui est entraînée en rotation de façon continue, en direction de la région de vision.

Entre sa chute sur la surface de transport et son arrivée à la région de vision, le flacon va se stabiliser sur la surface de transport, éventuellement à l'aide du rebord formé par le carter 22, c'est-à-dire que le flacon ne bougera plus par rapport à la surface de transport (Flacon F4).

Le mouvement continu de rotation du corps 11 amène le flacon, qui s'est stabilisé, dans la région de vision où sa position par rapport à la surface de transport est déterminé par le système de vision 5 (Flacon F5), puis amène le flacon dans la région de saisie où il est saisie (Flacon F6) par le robot de transfert 6 (non représenté sur les Figures 6 et 7) qui dispose le flacon sur le convoyeur de sortie 7 en le redressant (Flacon F7) pour distribution pour traitement ou stockage.

On souligne ici l'intérêt d'agencer la machine pour que l'espace au-dessus du convoyeur de sortie 7 soit libre, car cela permet au robot de transfert 6 d'accéder au convoyeur de sortie 7 soit par la droite, soit par la gauche, ce qui permet au robot de transfert 6 de placer l'objet sur le convoyeur de sortie 7 dans toute orientation désirée.

Dans le cas où le robot de transfert 6 n'a pas pu saisir le flacon dans la région de saisie, le mouvement continu de rotation du corps 11 amène le flacon à venir heurter un déflecteur 27 placé de manière fixe en travers de la surface de transport, en amont de la région d'entrée et en aval de la région de saisie. Le flacon est alors dévié, par le déflecteur 27, vers la trémie d'alimentation 2 en passant par une ouverture 28 prévue entre les deux régions d'extrémité du carter de protection 22 qui n'entoure pas la totalité du corps 11 (Flacon F8).

Dans le mode de réalisation décrit ci-dessus, avec les dimensions du corps 11 mentionnées ci-dessus et pour une application à des flacons, on peut par exemple faire tourner le corps 11 à une vitesse de 5 tr/min.

On souligne ici l'avantage d'avoir une surface de transport en anneau, car le flacon dispose, pour le même encombrement, d'un temps pour se stabiliser qui est plus grand que celui avec un convoyeur rectiligne. Ainsi, on obtient une stabilisation des objets qui est plus fiable, donc une détermination de leur position et une saisie par le robot de transfert qui sont également plus fiables, et par suite un débit plus élevé de la machine.

La machine selon la présente invention permet donc une distribution d'objets avec alimentation en vrac ayant un encombrement réduit au minimum, avec une remise en circulation des objets non saisis qui est intégrée à la machine et un débit plus élevé.

Il est bien entendu que le mode de réalisation qui a été décrit ci-dessus a été donné à titre indicatif et non limitatif et que des modifications peuvent être apportées sans que l'on s'écarte pour autant du cadre de la présente invention, telle que limitée par les revendications attenantes.

Ainsi, les dimensions et vitesses indiquées ci-dessus peuvent être choisies au besoin, en fonction par exemple des objets à distribuer, du débit souhaité, etc.

## Revendications

1. Machine de distribution d'objets avec alimentation en vrac, comprenant :
- une trémie d'alimentation (2), destinée à recevoir des objets en vrac qu'il s'agit de distribuer ;
- un dispositif de transport d'objets (4) ayant une surface de transport d'objets entraînée par des moyens d'entraînement pour transporter les objets qu'il s'agit de distribuer et destinée, en utilisation, à recevoir sur celle-ci, dans une première région du dispositif de transport d'objets (4), dite d'entrée, des objets en vrac ;
- un dispositif de transfert (3) des objets de la trémie (2) au dispositif de transport d'objets (4), destiné à verser sur la surface de transport, dans la région d'entrée, les objets qui proviennent de la trémie d'alimentation (2) ;
- un système de vision (5) placé au niveau d'une deuxième région du dispositif de transport d'objets (4), dite de vision, en aval, par rapport au déplacement de la surface de transport, de la région d'entrée, et apte à déterminer la position, sur le dispositif de transport d'objets (4), de chacun des objets, la région de vision et la région d'entrée étant séparées d'une distance définie, conjointement avec la vitesse d'entraînement de la surface de transport, pour que les objets soient répartis en une seule couche et stabilisés en position lorsqu'ils arrivent à la région de vision ; et
- au moins un robot de transfert (6) placé au niveau d'une troisième région du dispositif de transport d'objets (4), dite de saisie, en aval, par rapport au déplacement de la surface de transport, de la région de vision et apte à saisir chaque objet, au moins sur la base de la position dudit objet fournie par le système de vision (5), et à le placer sur un convoyeur de sortie (7),
le dispositif de transport d'objets (4) se prolongeant, après la région de saisie, en revenant au-dessus de la trémie d'alimentation (2), où il définit une quatrième région, dite de récupération, à partir de laquelle les objets en vrac non saisis dans la région de saisie sont transférés directement à la trémie d'alimentation (2) pour que lesdits objets non saisis soient de nouveau versés sur la surface de transport du dispositif de transport d'objets (4) en vue d'une saisie par le robot de transfert (6), **caractérisée par le fait que** le dispositif de transport d'objets (4) présente une ouverture centrale autour d'au moins une partie de laquelle s'étend la surface de transport et à travers laquelle passe le dispositif de transfert (3) qui est agencé pour faire monter les objets en vrac au-dessus de ladite surface de transport et les verser sur cette dernière.

2. Machine selon la revendication 1, **caractérisée par le fait que** sont prévus dans la région de récupération des moyens pour dévier en direction de la trémie d'alimentation (2) les objets non saisis dans la région de saisie, lesquels moyens de déviation sont notamment formés par un déflecteur (27) placé en travers de la surface de transport.

3. Machine selon l'une des revendications 1 et 2, **caractérisée par le fait que** la surface de transport du dispositif de transport d'objets (4) suit un chemin ouvert, notamment en U ou en fer à cheval.

4. Machine selon la revendication 2, **caractérisée par le fait que** le dispositif de transport d'objets est un carrousel (4) définissant un circuit fermé.

5. Machine selon la revendication 4, **caractérisée par le fait que** le carrousel (4) se présente sous la forme d'un corps (11) de forme circulaire, le cas échéant en anneau pour permettre le passage du dispositif de transfert (3) à travers l'ouverture centrale de l'anneau, le corps (11) étant monté rotatif autour d'un axe vertical et la surface supérieure du corps (11) constituant la surface de transport d'objets.

6. Machine selon l'une des revendications 1 à 5, **caractérisée par le fait qu'**un carter de protection (22) forme un rebord le long du bord extérieur de la surface de transport, de la région d'entrée à au moins la région de saisie, et la surface de transport est inclinée vers l'extérieur du dispositif de transport d'objets (4) de telle sorte que les objets peuvent être retenus sur la surface de transport par le carter de protection (22) et se stabiliser contre ce dernier.

7. Machine selon la revendication 6, **caractérisée par le fait que** la surface de transport du corps (11) formant le carrousel (4) appartient à un cône de révolution imaginaire dont l'axe coïncide avec l'axe de rotation du corps (11) et dont le sommet est au-dessus du corps, le demi-angle au sommet du cône étant avantageusement compris entre 1° et 45°.

8. Machine selon l'une des revendications 1 à 7, **caractérisée par le fait qu'**elle comprend en outre un convoyeur de sortie (7), sur lequel, en utilisation, les objets sont posés par le robot de transfert (6), une partie du convoyeur de sortie (7) étant, de préférence, disposée au-dessus de la trémie d'alimentation (2).

9. Machine selon la revendication 8, **caractérisée par le fait que** le convoyeur de sortie (7) est disposé de telle que sorte que l'espace au-dessus et autour du convoyeur de sortie (7) est libre de tout obstacle au déplacement du robot de transfert (6), de façon à permettre à ce dernier d'accéder au convoyeur de sortie (7) par l'un ou l'autre des côtés du convoyeur de sortie (7), par rapport à la direction de transport de ce dernier.

## Patentansprüche

1. Maschine zum Verteilen von Schüttgut mit loser Zuführung, die folgendes umfasst:
- einen Zufuhrtrichter (2) zur Aufnahme von Schüttgut, das verteilt werden soll;
- einen Schüttgutförderer (4) mit einer durch Antriebsmittel angetriebenen Schüttguttransportfläche, um das Schüttgut zu befördern, das verteilt werden soll, die dazu bestimmt ist, bei der Benutzung, auf letzterer in einem ersten Bereich des Schüttgutförderers (4), Eingang genannt, Schüttgut zu empfangen;
- eine Vorrichtung zur Überführung (3) des Schüttguts aus dem Trichter (2) zum Schüttgutförderer (4), um im Eingangsbereich das aus dem Zufuhrtrichter (2) stammende Schüttgut auf die Transportoberfläche zu schütten;
- ein Sichtsystem (5) auf Höhe eines zweiten Bereichs des Schüttgutförderers (4), Sichtbereich genannt, dem Eingangsbereich vorgeschaltet im Verhältnis zur Bewegung der Transportfläche, das fähig ist, die Position jedes Gegenstandes auf dem Schüttgutförderer (4) zu bestimmen, wobei der Sichtbereich und der Eingangsbereich durch einen definierten Abstand getrennt sind, zusammen mit der Antriebsgeschwindigkeit der Transportfläche, damit das Schüttgut in einer einzigen Schicht verteilt wird und in Position stabilisiert wird, wenn es beim Sichtbereich ankommt; und
- mindestens einen Übergaberoboter (6) auf Höhe eines dritten Bereichs des Schüttgutförderers (4), genannt Griffbereich, dem Sichtbereich vorgeschaltet im Verhältnis zur Bewegung der Transportfläche, der fähig ist, jeden Gegenstand zu ergreifen, mindestens auf der Grundlage der vom Sichtsystem (5) gelieferten Position des genannten Teils, und ihn auf einem Auslaufband (7) platzieren
wobei der Schüttgutförderer (4) sich nach dem Erfassungsbereich verlängert, beim Zurückkommen oberhalb des Zufuhrtrichters (2), wo er einen vierten Bereich definiert, genannt Rückgewinnungsbereich, von dem aus das im Erfassungsbereich nicht erfasste Schüttgut direkt zum Zufuhrtrichter (2) gebracht wird, damit die nicht erfassten Teile abermals auf die Transportfläche des Schüttgutförderers (4) geschüttet werden, zwecks Erfassung durch den Übergaberoboter (6),
**gekennzeichnet dadurch, dass** der Schüttgutförderer (4) eine zentrale Öffnung aufweist, wobei sich um mindestens einen Teil von dieser die Transportfläche erstreckt, und durch die die Vorrichtung zur Überführung (3) hindurchgeht, die angeordnet ist, um das Schüttgut über die Transportfläche zu bringen und sie auf letztere zu schütten.

2. Maschine nach Anspruch 1, **gekennzeichnet dadurch, dass** im Rückgewinnungsbereich Mittel vorgesehen sind, um die im Erfassungsbereich nicht erfassten Teile in Richtung auf den Zufuhrtrichter (2) abzulenken, wobei die Ablenkungsmittel insbesondere von einem Umlenkblech (27) gebildet werden, das quer durch die Transportfläche platziert ist.

3. Maschine nach einem der Ansprüche 1 und 2, **gekennzeichnet dadurch, dass** die Transportfläche des Schüttgutförderer (4) einem offenen Weg folgt, der insbesondere U-förmig oder hufeisenförmig ist.

4. Maschine nach Anspruch 2, **gekennzeichnet dadurch, dass** der Schüttgutförderer ein Karussell (4) ist, das einen geschlossenen Kreis bildet.

5. Maschine nach Anspruch 4, **gekennzeichnet dadurch, dass** das Karussell (4) ein Körper (11) von runder Form ist, gegebenenfalls ringförmig, um den Durchgang der Überführungsvorrichtung (3) durch die zentrale Öffnung des Ringes zu gestatten, wobei der Körper (11) um eine senkrechte Achse rotierend montiert ist und die obere Fläche des Körpers (11) die Schüttguttransportfläche bildet.

6. Maschine nach einem der Ansprüche 1 bis 5, **dadurch gekennzeichnet, dass** ein Schutzgehäuse (22) entlang des äußeren Randes der Transportfläche einen Rand bildet, vom Eingangsbereich bis mindestens zum Erfassungsbereich, und dass die Transportfläche nach außen in Bezug auf den Schüttgutförderer (4) geneigt ist, so dass die Gegenstände auf der Transportfläche durch das Schutzgehäuse (22) zurückgehalten werden können und sich gegen letzteres stabilisieren.

7. Maschine nach Anspruch 6, **gekennzeichnet dadurch, dass** die Transportfläche des Körpers (11), der das Karussell (4), bildet, zu einem imaginären Rotationskegel gehört, dessen Achse mit der Rotationsachse des Körpers (11) übereinstimmt und dessen Spitze oberhalb des Körpers liegt, wobei der Halbwinkel an der Spitze des Kegels vorteilhafterweise zwischen 1° und 45° liegt.

8. Maschine nach einem der Ansprüche 1 bis 7, **dadurch gekennzeichnet, dass** sie außerdem ein Auslaufband (7) umfasst, auf das bei der Benutzung die Teile vom Übergaberoboter (6) gelegt werden, wobei ein Teil des Auslaufbandes (7) vorzugsweise über dem Zufuhrtrichter (2) angeordnet sind.

9. Maschine nach Anspruch 8, **gekennzeichnet dadurch, dass** das Auslaufband (7) derart angeordnet ist, dass der Raum oberhalb und um das Auslaufband (7) herum frei von jedem Hindernis für die Bewegung des Übergaberoboters (6) ist, damit letzterer von beiden Seiten des Auslaufbands (7) Zugang zum Auslaufband (7) hat, in Bezug auf die Transportrichtung von letzterer.

## Claims

1. Bulk-fed machine for distributing objects, comprising:
- a feed hopper (2) intended to receive in bulk objects to be distributed;
- an object transport device (4) having an object transport surface driven by driving means for transporting the objects to be distributed, and intended, in use, to receive thereon, within a first, so-called inlet, region of the object transport device (4), bulk objects;
- a transfer device (3) for transferring the objects from the hopper (2) to the object transport device (4), intended to discharge on the transport surface, within the inlet region, the objects coming from the feed hopper (2);
- a vision system (5) arranged at a second, so-called vision, region of the object transport device (4), downstream of the inlet region with respect to the movement of the transport surface, and able to determine the position, on the object transport device (4), of each of the objects, the vision region and the inlet region being separated by a distance defined, together with the driving speed of the transport surface, such that the objects are distributed into a single layer and stabilized in position when they arrive at the vision region; and
- at least one transfer robot (6) arranged at a third, so-called pick-up, region of the object transport device (4), downstream of the vision region with respect to the movement of the transport surface, and able to pick-up each object, at least based on the position of said object provided by the vision system (5), and to place it on an outlet conveyor (7),
the object transport device (4) extending, after the pick-up region, back over the feed hopper (2), where it defines a fourth, so-caled recovery, region, from which the bulk objects which have not been picked-up in the pick-up region are directly transferred to the feed hopper (2) such that said non-picked up objects are discharged again on the transport surface of the object transport device (4) so as to be picked-up by the transfer robot (6),
**characterized in that** the object transport device (4) has a central opening around at least one part of which the transport surface extends, and through which passes the transfer device (3) which is arranged to rise the objects in bulk above said transport surface and discharge them on the latter.

2. Machine according to claim 1, **characterized in that** are provided, within the recovery region, means for deviating towards the feed hopper (2) the objects which have not been picked-up in the pick-up region, which deviating means are for example formed by a baffle (27) arranged across the carrying surface.

3. Machine according to one of claims 1 and 2, **characterized in that** the transport surface of the object transport device (4) follows an open path, for example U-shaped or horseshoe-shaped.

4. Machine according to claim 2, **characterized in that** the object transportdevice is a carousel (4) defining a closed circuit.

5. Machine according to claim 4, **characterized in that** the carousel (4) is formed as a body (11) with a circular shape, when appropriate a ring shape to allow the transfer device (3) to pass through the central opening of the ring, the body (11) being rotatably mounted around a vertical axis and the upper surface of the body (11) constituting the object transport surface.

6. Machine according to one of claims 1 to 5, **characterized in that** a protecting housing (22) forms a rim along the outer edge of the transport surface, from the inlet region to at least the pick-up region, and the transport surface is tilted toward the exterior of the object transport device (4) such that the objects can be retained on the transport surface by the protecting housing (22) and be stabilized against the latter.

7. Machine according to claim 6, **characterized in that** the transport surface of the body (11) forming the carousel (4) belongs to an imaginary cone of revolution, the axis of which coincides with the rotation axis of the body (11), and the vertex of which is above the body, the half-angle at the vertex of the cone being advantageously between 1° and 45°.

8. Machine according to one of claims 1 to 7, **characterized in that** it further comprises an outlet conveyor (7) on which, in use, the objects are placed by the transfer robot (6), a part of the outlet conveyor (7) being, preferably, disposed over the feed hopper (2).

9. Machine according to claim 8, **characterized in that** the outlet conveyor (7) is arranged such that the gap above and around the outlet conveyor (7) is free of any obstacle against the movement of the transfer robot (6), so as to allow the latter to access to the outlet conveyor (7) by either side of the outlet conveyor (7), with respect to the transport direction of the latter.
